# NEUE EUROPÄISCHE PATENTSCHRIFT

(11) **EP 0 974 630 B2**
(45) Veröffentlichungstag und Bekanntmachung des Hinweises auf die Entscheidung über den Einspruch: **23.09.2015**
(45) Hinweis auf die Patenterteilung: 28.05.2008
(21) Anmeldenummer: 99113930.4
(22) Anmeldetag: 16.07.1999
(51) Int. Cl.: C09D 201/00, F16J 15/12

(54) **Lösemittelfreier applizierbarer wärmehärtender Beschichtungsstoff**
Solvent-free applicable thermosetting coating material
Matériau de revêtement thermodurcissable applicable sans solvant

(30) Priorität: 22.07.1998 DE 19833063
(43) Veröffentlichungstag der Anmeldung: 26.01.2000
(73) Patentinhaber: REINZ-Dichtungs-GmbH, 89233 Neu-Ulm (DE)
(72) Erfinder: Lemm, Markus, 89134 Blaustein (DE); Lemke, Kai, 89075 Ulm (DE); Grafl, Dieter, Dipl.-Chem., 89079 Ulm (DE)
(74) Vertreter: Pfenning, Meinig & Partner GbR

(56) Entgegenhaltungen:
- EP-A- 0 486 975
- WO-A-90/15109
- DE-A- 2 914 987
- DE-A- 3 905 922
- DE-A- 19 741 225
- US-A- 4 169 185
- US-A- 4 539 232
- US-A- 4 973 516
- US-A- 5 368 315
- PATENT ABSTRACTS OF JAPAN vol. 012, no. 316 (C-524), 26. August 1988 (1988-08-26) & JP 63 086764 A (NIPPON OIL & FATS CO LTD;OTHERS: 01), 18. April 1988 (1988-04-18)

## Beschreibung

Die Erfindung betrifft eine metallische Flachdichtung, die mit einem lösemittelfrei applizierbaren härtbaren Beschichtungsstoff, der neben dem Beschichtungsstoff selbst ein Gleitmittel enthält, beschichtet ist.

Insbesondere bei der Beschichtung von Oberflächen von Metalldichtungen spielen die Eigenschaften des Beschichtungsstoffes und dessen Verarbeitbarkeit eine wichtige Rolle.

Flachdichtungen, insbesondere Zylinderkopfdichtungen oder Auspuffdichtungen von Brennkraftmaschinen, werden nämlich zunehmend als Ein- bzw. Mehrlagenmetalldichtungen ausgeführt und bestehen dabei üblicherweise aus bis zu vier Einzellagen. Zur Abdichtung der Medien werden eine oder mehrere, vorzugsweise aus Stahl bestehende Lagen gesickt, gefalzt bzw. gekantet. Die Dichtflächen von derartigen Flachdichtungsmaterialien werden darüber hinaus zur Verbesserung ihrer Abdichtgüte mit ein- oder beidseitigen teil- oder ganzflächigen Beschichtungen aus Polymermaterialien versehen. Als polymere Materialien kommen dabei grundsätzlich Elastomere, Thermoplaste oder Duroplaste zum Einsatz, die sich beim Einbau unter Dichtpressung noch verformen und dadurch an den korrespondierenden Dichtflächen gut anliegen und abdichten. Beispiele für derartige Polymermaterialien sind Fluor, Kautschuk, Polyimidkautschuk und Nitrilbutadien.

Aus der DE 39 05 922 ist es weiterhin bekannt, einer derartigen Polymerbeschichtung zusätzlich Festschmierstoffe zuzusetzen, um die Gleitreibung herabzusetzen. Als Festschmierstoffzusatz wird dabei ein Gemisch aus feinkörnigem bis pulvrigem Polytetrafluorethylen und feinkörnigem bis pulvrigem Molybdänsulfit vorgeschlagen.

In der DE 38 020 90 C2 wird ebenfalls eine Elastomerbeschichtung für Metalldichtungen beschrieben, wobei hier pulverige mineralische Füllstoffe, beispielsweise Siliziumdioxid, Silikate oder Kaoline zur Herabsetzung der Gleitreibung vorgeschlagen werden.

Beschichtungsstoffe mit Bindern, Vernetzern und Gleitmitteln sind auch aus der DE 197 41 225 A1 sowie der WO 90/15109 A bekannt.

Nachteilig bei allen diesen Beschichtungsstoffen ist es hierbei, dass es sich hier im Wesentlichen um Stoffe handelt, die nasschemisch aufgebracht werden und bei denen mehr oder minder toxische Lösungsmittel eingesetzt werden. Auch ist es erforderlich, dass bei der Aufbringung von diesen Schichten aufwendige Verfahrensgänge eingehalten werden.

Ausgehend hiervon ist es die Aufgabe der vorliegenden Erfindung, eine metallische Flachdichtung vorzuschlagen, die mit einem lösemittelfrei applizierbare Beschichtungsstoff versehen ist, der auch mittels modernen gängigen Techniken einfach und problemlos auf die Oberfläche der Metalllagen einer Zylinderkopfdichtung oder Auspuffdichtung aufgebracht werden kann. Der Beschichtungsstoff muss dabei aber gleichzeitig auch noch so ausgestaltet sein, dass er die Gleitreibung herabsetzt und mikroabdichtende Wirkung besitzt.

Die Aufgabe wird durch die Merkmale des Patentanspruchs 1 gelöst.

Die Unteransprüche zeigen vorteilhafte Weiterbildungen auf.

Erfindungsgemäß wird somit vorgeschlagen, einen lösungsmittelfrei applizierben Beschichtungsstoff zu verwenden, der somit sicherstellt, dass keine schädlichen Dämpfe entstehen und somit keine Probleme beim Auftragen des Beschichtungsstoffes auf die Metalllagen auftreten. Besonders hervorzuheben ist, dass mit dem Beschichtungsstoff gleichzeitig Gleitmittel gemaß Anspruch 1 miteingebracht werden, so dass dann durch einen Beschichtungsvorgang eine Oberflächenbeschichtung unter lösungsmittelfreier Applikation erreicht wird und gleichzeitig auch die Gleitreibung herabgesetzt ist.

Der Beschichtungsstoff enthält dabei ein lösungsmittelfreies, flüssiges oder pulverförmiges schmelzbares Polymer, das mit Vernetzer verarbeitet werden kann, wobei in das vorstehend erwähnte Polymer Gleitstoffe eingearbeitet sind. Bevorzugt enthält der Beschichtungsstoff dabei 50 bis 85 Gew.-% Binder, bis 50 Gew.-% Vernetzer und 5 bis 40 Gew.-% Gleitmittel.

Besonders bevorzugt ist es, wenn beim Beschichtungsstoff pulverförmige Polymere, d.h. Pulverlacke, eingesetzt werden. Derartige Pulverlacke bestehen üblicherweise aus Bindern und Vernetzern. Beim Beschichtungsstoff ist es besonders bevorzugt, wenn der Binder ein anorganisches Polymer, wie Polysiloxan, Siloxanharz oder Polyphosphazene ist oder ein organisches Polymer, wie Phenolharz, Epoxyharz, Polyimid oder ungesättigte Polyester oder PVC. Selbstverständlich ist es auch möglich, dass die Polymere aus den vorstehend erwähnten Gruppen gemischt eingesetzt werden können. Als Vernetzer für derartige Binder können alle aus dem Stand der Technik bisher bekannten Vernetzer eingesetzt werden. Ein Überblick hierin ist z.B. zu entnehmen aus Stoye/Freitag, Lackharze, Verlag Hauser 1996.

Beim Beschichtungsstoff ist es besonders wichtig, dass Schichtdicken der fertigen Schicht realisiert werden, die zwischen 5 und 100 µm liegen. Zur Realisierung von derartigen Schichtdicken ist es erforderlich, dass Pulver mit einer Pulvergröße zwischen 7 und 80 µm, bevorzugt 40 bis 60 µm eingesetzt werden. Bevorzugte pulverförmige Zusammensetzungen, mit denen sich derartige Schichtdicken realisieren lassen, basieren auf Epoxiharzen, Silikonharzen, Polyesterharzen oder Gemischen. Die Epoxiharze werden z.B. mit Polycarbonsäure oder Polyphenolen vernetzt, Polyesterharze mit mehrfunktionellen Glycidylverbindungen oder blockierten Isocyanaten. Silikonharze vernetzen mit Zinnkatalysatoren oder rein thermisch.

Neben den vorstehend beschriebenen Möglichkeiten zur Formulierung des Beschichtungsstoffes durch pulverförmige Ausgangskomponenten ist es auch möglich, dass anstatt der pulverförmigen Ausgangsstoffe lösungsmittelfreie, flüssige Polymere eingesetzt werden. Bei günstigen Beschichtungsstoffen sollte die Viskosität zwischen 50 und 200 000 MPas liegen. Beispiele für derartige lösungsmittelfreie flüssigverarbeitbare Polymere sind:

Epoxiharz/mehrfunktioneller aminischer Vernetzer für Kaltvernetzung oder Polydimethylsiloxan mit blockierten SiOH-Gruppen und Zinnkatalysator.

In diese lösungsmittelfrei verarbeitbaren flüssigen Polymere können die vorstehend beschriebenen Gleitmittel in denselben Mengenverhältnissen eingearbeitet werden.

Das Auftragsverfahren für die beschriebenen Beschichtungsstoffe hängt davon ab, ob pulverförmige oder flüssige Polymere eingesetzt werden. Grundsätzlich sind alle aus dem Stand der Technik bekannten Auftragsverfahren wie Pulversprühen, Wirbelsintern, Flüssigpolymerwalzen, Gießen, Siebdruck oder Tauchen möglich.

Wärmevernetzende Polymere werden in einem nachfolgenden Prozess im Ofen gehärtet. Es kann vorteilhaft sein, das Pulver im Ofen nur aufzuschmelzen und die Polymerschicht erst im eingebauten Zustand im Bauteil zu vernetzen oder zumindest nachzuvernetzen. Dadurch kann eine bessere Anpassung an die Rauhtiefen der Bauteile erreicht werden bis in einen festen Zustand vernetzt und im Bauteil nachvernetzt.

Der große Vorteil des Beschichtungsstoffes liegt nun darin, dass hier Oberflächenbeschichtungen auf Metalllagen von Metalldichtungen mittels modernster Technik über EDV-gestützte Programme durchgeführt werden können. Dadurch wird auch die Möglichkeit eröffnet, dass nicht nur ganzflächige Beschichtungen hergestellt werden, sondern dass über eine diskrete Steuerung des Auftragsverfahrens Teilbereiche nach ausgewähltem Layout beschichtet werden. Dadurch, dass lösungsmittelfrei gearbeitet wird, entstehen keinerlei geruchsbedingte Belästigungen und die Schicht weist gleichzeitig Gleiteigenschaften auf. Durch dieses Beschichtungsverfahren werden für Metalldichtungen deutliche Vorteile gegenüber dem Stand der Technik in der Verfahrensökonomie und in der Umweltbelastung erreicht.

Der Beschichtungsstoff wird bevorzugt mit einer Schichtdicke von 20 bis 80 µm auf den Metalldichtungen aufgebracht.

Der Beschichtungsstoff kann auch zum Auftragen einer Schicht für ein Mehrschichtsystem verwendet werden. So kann eine derartige Schicht als Grundlage für weitere Beschichtungen dienen.

Dadurch, dass der Beschichtungsstoff mit den verschiedensten Techniken aufgebracht werden kann, lassen sich metallische Dichtungen für die unterschiedlichsten Anwendungen herstellen. Der Beschichtungsstoff kann dabei ganzflächig oder partiell aufgebracht sein.

Die Erfindung wird nachfolgend anhand eines ausgewählten Formulierungsbeispiels näher beschrieben.

### Beispiel

Lösungsmittelfreies flüssiges Polymer: z.B. 798 g eines flüssigen lösungsmittelfreien Polydimethylsiloxans mit Methoxyschutzgruppen, 54 g Tetraethoxysilan, 30 g eines Zinnkatalysators, 100 g Bornitrid, 10 g eines aminofunktionellen Silans und 8 g eines Antischaummittels.

## Patentansprüche

1. Metallische Dichtung, insbesondere Flachdichtung, mit mindestens einer metallischen Lage und mindestens einem Dichtungsdurchbruch, wobei mindestens eine Oberfläche einer metallischen Lage zumindest teilweise mit einem lösungsmittelfrei applizierten Beschichtungsstoff enthaltend als Binder anorganische Polymere und/oder organische Polymere, Vernetzer und Gleitmittel, beschichtet ist, und das Gleitmittel des Beschichtungsstoffes Bornitrid oder Bornitrid in gemischen mit Gleitmittel ausgewählt aus Grafit, Molybdändisulfid, PTFE und Metallpulver ist.

2. Metallische Flachdichtung nach Anspruch 1, **dadurch gekennzeichnet, dass** der Beschichtungsstoff 50 bis 85 Gew.-% Binder, bis zu 50 Gew.-% Vernetzer und 5 bis 40 Gew-% Gleitmittel enthält.

3. Metallische Flachdichtung nach Anspruch 1 oder 2, **dadurch gekennzeichnet, dass** der anorganische Binder des Beschichtungsstoffes ausgewählt ist aus Polysiloxanen, Siloxanharzen und/oder Polyphosphazene.

4. Metallische Flachdichtung nach mindestens einem der Ansprüche 1 bis 3, **dadurch gekennzeichnet, dass** der organische Binder des Beschichtungsstoffes ausgewählt ist aus Phenolharzen, Epoxidharzen, Polyimiden und/oder ungesättigten Polyestern.

5. Metallische Flachdichtung nach mindestens einem der Ansprüche 1 bis 4, **dadurch gekennzeichnet, dass** der Vernetzer des Beschichtungsstoffes in Abhängigkeit vom Binder ausgewählt ist.

6. Metallische Flachdichtung nach mindestens einem der Ansprüche 1 bis 5, **dadurch gekennzeichnet, dass** bei flüssigen Polymeren im Beschichtungsstoff deren Viskosität zwischen 50 und 200 000 MPas liegt.

7. Metallische Flachdichtung nach mindestens einem der Ansprüche 1 bis 6, **dadurch gekennzeichnet, dass** der Beschichtungsstoff Zusatzstoffe, wie Additive, Füllstoffe und Verlaufsmittel enthält.

8. Metallische Flachdichtung nach mindestens einem der Ansprüche 1 bis 7, **dadurch gekennzeichnet, dass** bei pulverförmigen Beschichtungsstoffen eine Pulvergröße von 7 bis 80 µm eingehalten wird.

9. Metallische Flachdichtung nach mindestens einem der Ansprüche 1 bis 8, **dadurch gekennzeichnet, dass** Beschichtungen mit einer Schichtdicke von 5 bis 100 µm aufgebracht sind.

10. Metallische Flachdichtung nach mindestens einem der Ansprüche 1 bis 9, **dadurch gekennzeichnet, dass** der Beschichtungsstoff Bestandteil eines Mehrschichtsystems ist.

## Claims

1. Metallic gasket, in particular a flat gasket, having at least one metallic layer and at least one gasket opening, wherein at least one surface of a metallic layer is coated at least partially with a coating material which is applied in a solvent-free manner and contains as binder inorganic polymers and/or organic polymers, cross-linking agent and lubricant, and wherein the lubricant of the coating material is boron nitride or boron nitride in mixtures with lubricant selected from graphite, molybdenum disulphide PTFE and metal powder.

2. Metallic flat gasket according to claim 1, **characterised in that** the coating material contains 50 to 85% by weight of binder, up to 50% by weight of cross-linking agent and 5 to 40% by of weight lubricant.

3. Metallic flat gasket according to claim 1 or 2, **characterised in that** the inorganic binder of the coating material is selected from polysiloxanes, siloxane resins and/or polyphosphazenes.

4. Metallic flat gasket according at least to one of the claims 1 to 3, **characterised in that** the organic binder of the coating material is selected from phenol resins, epoxy resins, polyimides and/or unsaturated polyesters.

5. Metallic flat gasket according at least to one of the claims 1 to 4, **characterised in that** the cross-linking agent of the coating material is selected as afunction of the binder.

6. Metallic flat gasket according at least to one of the claims 1 to 5, **characterised in that**, in the case of liquid polymers in the coating material, the viscosity thereof is between 50 and 200,000 MPas.

7. Metallic flat gasket according at least to one of the claims 1 to 6, **characterised in that** the coating material contains additional materials, such as additives, fillers and flow improvers.

8. Metallic flat gasket according at least to one of the claims 1 to 7, **characterised in that**, in the case of pulverulent coating materials, a powder size of 7 to 80 µm is maintained.

9. Metallic flat gasket according at least to one of the claims 1 to 8, **characterised in that** coatings are applied with a layer thickness of 5 to 100 µm.

10. Metallic flat gasket according at least to one of the claims 1 to 9, **characterised in that** the coating material is a component of a multilayer system.

## Revendications

1. Joint étanche métallique, en particulier joint étanche plat, comprenant au moins une couche métallique et au moins une rupture d'étanchéité, dont au moins une surface d'une couche métallique est revêtue, au moins en partie, d'une substance de revêtement appliquée sans solvant contenant comme liant des polymères inorganiques et/ou des polymères organiques, des agents de réticulation et des lubrifiants et dont la substance de revêtement est le nitrure de bore, ou le nitrure de bore en mélanges avec des lubrifiants choisi parmi le graphite, le disulfure de molybdène, le PTFE et une poudre métallique.

2. Joint métallique plat selon la revendication 1, **caractérisé en ce que** la substance de revêtement contient 50 à 85 % en poids de liant, jusqu'à 50 % en poids d'agent de réticulation et 5 à 40 % en poids de lubrifiant.

3. Joint métallique plat selon la revendication 1 ou 2, **caractérisé en ce que** le liant inorganique de la substance de revêtement est choisi parmi les polysiloxanes, les résines siloxanes et/ou les polyphosphazènes.

4. Joint métallique plat selon au moins l'une quelconque des revendications 1 à 3, **caractérisé en ce que** le liant organique de la substance de revêtement est choisi parmi les résines phénoliques, les résines époxydes, les polyimides et/ou les polyesters insaturés.

5. Joint métallique plat selon au moins l'une quelconque des revendications 1 à 4, **caractérisé en ce que** l'agent de réticulation de la substance de revêtement est choisi en fonction du liant.

6. Joint métallique plat selon au moins l'une quelconque des revendications 1 à 5, **caractérisé en ce que**, dans le cas de polymères liquides dans la substance de revêtement, leur viscosité se situe entre 50 et 200 000 MPas.

7. Joint métallique plat selon au moins l'une quelconque des revendications 1 à 6, **caractérisé en ce que** la substance de revêtement contient des substances supplémentaires, telles que des additifs, des charges et des agents d'écoulement.

8. Joint métallique plat selon au moins l'une quelconque des revendications 1 à 7, **caractérisé en ce que**, dans les substances de revêtement pulvérulentes, on maintient une granulométrie de la poudre de 7 à 80 µm.

9. Joint métallique plat selon au moins l'une quelconque des revendications 1 à 8, **caractérisé en ce que** l'on applique des revêtements d'une épaisseur de couche de 5 à 100 µm.

10. Joint métallique plat selon au moins l'une quelconque des revendications 1 à 9, **caractérisé en ce que** la substance de revêtement fait partie d'un système multicouche.
